# EUROPEAN PATENT APPLICATION

(11) **EP 4 686 304 A1**
(43) Date of publication of application: **28.01.2026**
(21) Application number: 25191254.9
(22) Date of filing: 23.07.2025
(51) Int. Cl.: H04W 74/06, H04W 28/02, H04W 84/12

(54) **ENABLING SIGNALING OF TRAFFIC INFORMATION USING TRIGGER FRAMES IN WIRELESS COMMUNICATIONS**

(30) Priority: 24.07.2024 US 202463675167 P; 18.10.2024 US 202463708837 P
(71) Applicant: INTEL Corporation, Santa Clara, CA 95054 (US)
(72) Inventor: AKHMETOV, Dmitry, Hillsboro (US); ALEXANDER, Danny, Neve Efraim Monoson (IL); BEN-ARI, Danny, 4583600 Tsur Natan (IL); CANPOLAT, Necati, Beaverton, 97006 (US); CARIOU, Laurent, 29290 Milizac (FR); DAS, Dibakar, Hillsboro, 97123 (US); HAMAMI, Ilan, 4060515 Tel Mond (IL); HAREUVENI, Ofer, HA 26302 Haifa (IL); OREN, Elad, M 62493 Tel Aviv (IL); SUDHAKARAN, Susruth, Portland, 97229 (US)
(74) Representative: Viering, Jentschura & Partner mbB Patent- und Rechtsanwälte

(57) **Abstract**

An apparatus for an access point, AP, the apparatus including processing circuitry coupled to storage, the processing circuitry may be configured to: encode a buffer status report poll, BSRP, trigger frame for transmission to a recipient AP, wherein the BSRP trigger frame comprises a user information field comprising information representing a flow that the AP requests to schedule during a transmission opportunity, TXOP; and instruct to transmit the BSRP trigger frame to the recipient AP.

## Description

### CROSS-REFERENCE TO RELATED APPLICATIONS

The present application claims priority to US Provisional Patent Application Ser. No. 63/675,167 filed on July 24, 2024 and US Provisional Patent Application Ser. No. 63/708,837 filed on October 18, 2024.

### TECHNICAL FIELD

This disclosure generally relates to systems and methods for wireless communications and, more particularly, to trigger frame signaling of wireless traffic information and to mechanism to identify high priority stream that maps to a low priority TID.

### BACKGROUND

Wireless devices are becoming widely prevalent and are increasingly requesting access to wireless channels. The Institute of Electrical and Electronics Engineers (IEEE) has been developing one or more standards to enable wireless communications, and in some cases, to enable Radio Local Area Networking (RLAN). Third Generation Partnership Project (3GPP) cellular technologies also started supporting RLAN with introduction of Licensed Assisted Access (LAA) technology with LTE and later extended to New Radio (NR-U) with 5G New Radio (NR).

### BRIEF DESCRIPTION OF THE DRAWINGS

FIG. 1 is a network diagram illustrating an example network environment, in accordance with one or more example embodiments of the present disclosure.
FIG. 2 illustrates an example portion of a basic trigger frame in accordance with one or more example embodiments of the present disclosure.
FIG. 3 illustrates an example portion of a trigger frame format in accordance with one or more example embodiments of the present disclosure.
FIG. 4 illustrates an example format of an extremely high throughput (EHT) variant User Information field format in accordance with one or more example embodiments of the present disclosure.
FIG. 5 illustrates a flow diagram of a process for signaling traffic information, in accordance with one or more example embodiments of the present disclosure.
FIG. 6 illustrates a flow diagram of illustrative process for a priority stream identification system, in accordance with one or more example embodiments of the present disclosure.
FIG. 7 illustrates a functional diagram of an exemplary communication station that may be suitable for use as a user device, in accordance with one or more example embodiments of the present disclosure.
FIG. 8 illustrates a block diagram of an example machine upon which any of one or more techniques (e.g., methods) may be performed, in accordance with one or more example embodiments of the present disclosure.
FIG. 9 is a block diagram of a radio architecture in accordance with some examples.
FIG. 10 illustrates an example front-end module circuitry for use in the radio architecture of FIG. 9, in accordance with one or more example embodiments of the present disclosure.
FIG. 11 illustrates an example radio IC circuitry for use in the radio architecture of FIG. 9, in accordance with one or more example embodiments of the present disclosure.
FIG. 12 illustrates an example baseband processing circuitry for use in the radio architecture of FIG. 9, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

Aspects described herein are related to i) traffic information signaling; and/or ii) priority stream identification, noting that some aspects are related to the both.

### Aspects related to the traffic information signaling include the following until priority stream identification related aspects:

The IEEE 802.11 technical standards define wireless communications for Wi-Fi, including for signaling of wireless traffic information (TIM). The 802.11be standard has expanded on the REVme stream classification service (SCS) mechanism to signal a resource request from a station (STA) to an access point AP for uplink (e.g., AP to STA), downlink (e.g., STA to AP), and peer-to-peer (e.g., STA to STA) directions by including a quality of service (QoS) element with the SCS request. For example, STAs may map their scheduling requirements to QoS parameters signaled in a SCS Descriptor element of a SCS Request frame sent to the AP, which may allocate resources (e.g., frequency and time) to satisfy the QoS. When an AP accepts the SCS Request from an STA, the AP creates an SCS stream, and the AP performs the following actions to satisfy the QoS requirement of the STA: (1) In the uplink direction, the AP may send basic trigger frames to solicit traffic from the STA with a requested periodicity and with an Uplink Length field set to a value sufficient to meet a minimum data rate signaled by the STA, and (2) in the peer-to-peer direction, the AP may send a multi-user (MU) request to send (RTS) transmissions (TXS) frame to satisfy the requirements of peer-to-peer traffic.

WiFi-8 (the successor to 802.11be) is expected to enhanced the 802.11be MU RTS TXS mechanism to allow a sharing AP to share its obtained transmission opportunity (TXOP) with another shared AP. For example, a first step may allow a sharing AP to announce or poll the other shared AP about the other shared AP's traffic requirements, and a second step may include the first sharing AP to send a MU RTS TXS frame to allocate TXOP time to the other shared AP.

However, the TXOP sharing described above currently has the following limitations: (1) For the uplink direction, an STA may include multiple flows mapped to a same access category (AC), out of which at least one is mapped to a QoS flow (i.e., one for which an SCS stream is established). However, when there is a basic trigger frame from AP to STA, there is no signaling beyond a Preferred AC field that signals whether the trigger frame is for the flow for which the SCS was established. Therefore, the task of identifying the correct traffic flow for a given trigger frame is the responsibility of the STA, and can be complicated in real-time. (2) For the peer-to-peer direction, similarly when an STA has negotiated multiple SCS flows for peer-to-peer traffic (e.g., softAP PC connected to two head-mounted displays), then when the STA receives a MU RTS TXS frame from an infra-AP for one of the QoS flows, the burden is on the STA to determine to which flow the MU RTS TXS frame applies. (3) For multi-APs, the Schedule Announcement frame (e.g., expected to either be a buffer status report poll or MU-RTS variant trigger frame) would need to announce the traffic type for which the TXOP is going to be used. No such signaling exists yet.

In one or more embodiments, to address the above-described limitations, the enhanced techniques herein propose introduction of new signaling in the User Information field of a basic trigger frame that signals the flow identifier, for the uplink direction. For the peer-to-peer and multi-AP allocations, the enhanced techniques herein propose inclusion of new signaling in the User Information field of a MU RTS trigger frame, which signals the flow identifier. For a multi-AP schedule announcement and/or polling, the enhanced techniques herein propose inclusion of new signaling in the User Information of a buffer status report poll (BSRP) trigger frame, which signals the flow(s) that a sharing AP requests to schedule during a TXOP. As a result, the design would improve uplink scheduling at non-AP STAs by moving to the AP some of the STA burden of meeting QoS requirements through trigger frames, and also may improve performance of STAs using triggered peer-to-peer mechanisms.

In one or more embodiments, the basic trigger frame may include the new signaling in the User Information field and/or in the Trigger Dependent User Information field of the trigger frame to carry the identifier of the QoS flow solicited by the trigger frame from the requesting STA.

In one or more embodiments, the MU RTS TXS frame may include the new signaling in the User Information field to carry the identifier of the (e.g., peer-to-peer or otherwise) QoS flow that is being solicited by the trigger frame from the requesting STA.

In one or more embodiments, the BSPR trigger frame may include the new signaling for the traffic priority of the TXOP.

In one or more embodiments, the MU enhanced distributed channel access (EDCA) rules may be applied at a traffic identifier (TID) level only for specific QoS flows requested in the trigger frame.

In one or more embodiments, when a WiFi 8 STA has negotiated an SCS flow with a WiFi 8 AP and the SCS flow maps to a specific TID, one or more of the following options may be used to signal the preferred TID in a basic trigger frame sent to the STA: (1) An additional User Information field may be included to the same STA, in which some fields beyond the address identifier (AID) field of the User Information field may be used to indicate the preferred TID(s) (e.g., multiple User Information fields addressed to a same STA). (2) In another option, one reserved bit from the User Information field may be used to signal that the Trigger Dependent User Information field includes a Preferred TID while the Trigger Dependent User Information field itself signals the preferred TID (e.g., repurposing bits B4-B7 in the Trigger Dependent User Information field to signal the Preferred TID, and reducing the range of a TID Aggregation Limit from 8 to 4). When a TID includes only traffic for a given SCS flow, this signals the QoS flow to a STA.

In another option (3), the User Information field may remain as a baseline (e.g., the AP may include a Preferred TID in the Trigger Dependent User Information field for a WiFi 8 STA when the STA has negotiated an SCS stream with the AP). The SCS setup may include additional signaling or the signaling may be implicit if the SCS is established for a TID that maps to a value 8-15.

In another option (4), one reserved bit in the Common Information field or the Special User Information field may be used to signal that all (or at least one) Wi-Fi 8 STA(s) signaled in the trigger frame with an established SCS will be signaled a Preferred TID information (e.g., using a second User Information field for the STA or reusing the Trigger Dependent User Information field).

In another option (5), when the AP signals a Preferred TID that maps to an access category (AC) in a basic trigger frame, and the STA responds with the data for that TID only, the MU EDCA timer rules for the AC may apply only for uplink traffic at that STA that maps to the TID. In this manner, for medium access control (MAC) service data units (MSDUs) belonging to other TID(s) that mapped to the AC, for which there was no trigger-based physical layer (PHY) protocol data unit (PPDU) transmission), the STA may continue to transmit the MSDUs using EDCA (e.g., regular or HiP EDCA).

In another option (6), the STA may negotiate with an AP (e.g., during an SCS Request or in an Association Request) whether the MU EDCA rules as described above apply at a TID level. The AP also may signal its capability to support such behavior if not mandated otherwise.

In another option (7), the Preferred TID or SCSID information may be signaled in the User Information field of an MU RTS TXS frame. There may be at least two usages of this information: (1) 802.11 may indicate that the information is a SCSID, which case the SCSID negotiated by the STA for peer-to-peer and/or in-basic service set (in-BSS) traffic (and possibly uplink traffic) may be limited to fit the size of the field in the User Information field. For example, if there are only three bits used in the User Information field, the STA may negotiate only up to eight SCS flows with the infra-AP. (2) 802.11 may indicate that the information is a TID value signaled in the QoS Characteristics element signaled by the STA for peer-to-peer/in-BSS traffic. In this case, the STA may decouple the value of the TID in the QoS Characteristics element from the UP value even for direct link or peer-to-peer traffic.

In one or more embodiments, if a BSRP Trigger frame is used as a Schedule Announcement/Polling frame, then the Special User Information or reserved bits in Common Information may be used to signal the User Priority/AC used for the TXOP. On receipt of this, the shared AP or a STA may respond only the queue size info for the TID(s) that map to that AC.

In one or more embodiments, if a BSRP Trigger frame is used as a Schedule Announcement/Polling frame, then each STA for which the sharing AP may need to announce which flow will be triggered using a second User Information field added and containing the SCSID / TID of the flow for which information is sought.

In one or more embodiments, the response from a STA to a BSRP Trigger frame may include buffer status report (BSR)/queue size information per SCSID for some SCSID set.

In one or more embodiments, in all the above options, the flow ID included in the Trigger frames could be a mapping from SCSID to a new field value. For example, the STA negotiates more than 8 SCS UL flows with an AP while the AP can signal only up to 8 possible ID values using 3 bits in a Trigger frame. In this case, a mapping may be defined from the value indicated in the Trigger frame to an SCSID value so that the client could determine which flow is solicited. The mapping could be signaled additionally in the SCS Request or some other Management frame exchange, or otherwise provided in 802.11.

Aspects related to the priority stream identification include the following:
Wi-Fi 8 (IEEE 802.11bn or ultra high reliability (UHR)) is the next generation of Wi-Fi and a successor to the IEEE 802.11be (Wi-Fi 7) standard. In line with all previous Wi-Fi standards, Wi-Fi 8 will aim to improve wireless performance in general along with introducing new and innovative features to further advance Wi-Fi technology.

To scale SCS to include multiple traffic flows it was proposed in the past a way to map a new high priority SCS flow to an unused TID. This would allow easier differentiation of QoS traffic within the lower MAC by using the TID values in MAC header. For example, if there are already two QoS flows mapped to AC_VI using TIDs 4 and 5 and if there is a third UL traffic that needs to be mapped to AC VI, then one can use one of the unused TIDs in AC_BK (say, 2) to be remapped to use AC_VI in an SCS Request. This allows higher probability of unique mapping of SCS flows to TID.

Clearly, in the above example if the higher layer starts sending traditional BK packets to TID 2 after the SCS stream setup for the video flow, then this might create issues at the receiver AP if that packet is intended to be forwarded to another device in same ESS. In this case the ideal behavior would be for the receiver AP to forward the set of packets using TID 2 corresponding to the SCS flow with higher priority and the others in same TID with lower priority. However, there is no info available at MAC layer for the AP to determine this.

Example embodiments of the present disclosure relate to systems, methods, and devices for mechanisms to identify high priority stream that maps to a low priority TID.

The proposed solution involves adding information to the MAC header of the QoS Data frame to differentiate flows mapped to a TID that belongs to an SCS flow from others. One approach is to use the MSB of the TID subfield in the QoS Control field: if the bit is set to 0, it indicates non-QoS traffic, and if set to 1, it indicates QoS traffic. This method reuses the existing TID space between 0-7 and converts the unused MSB into a new field, rather than using a new TID in the range of 8-15.

Additionally, if a STA does not intend to mix regular BE or BK traffic with high-priority VO/VI traffic in the same TID, it can indicate this in the SCS Request using a field in the QoS Characteristics element or elsewhere. During association, a STA may signal (e.g., in a Capabilities element) that it consistently uses one TID for regular BE (e.g., TID-0) and BK (e.g., TID-1) traffic, while another TID is reserved for high-priority flows, either statically or following an SCS stream setup.

The above descriptions, related to the both aspects, are for purposes of illustration and are not meant to be limiting. Numerous other examples, configurations, processes, algorithms, etc., may exist, some of which are described in greater detail below. Example embodiments will now be described with reference to the accompanying figures.

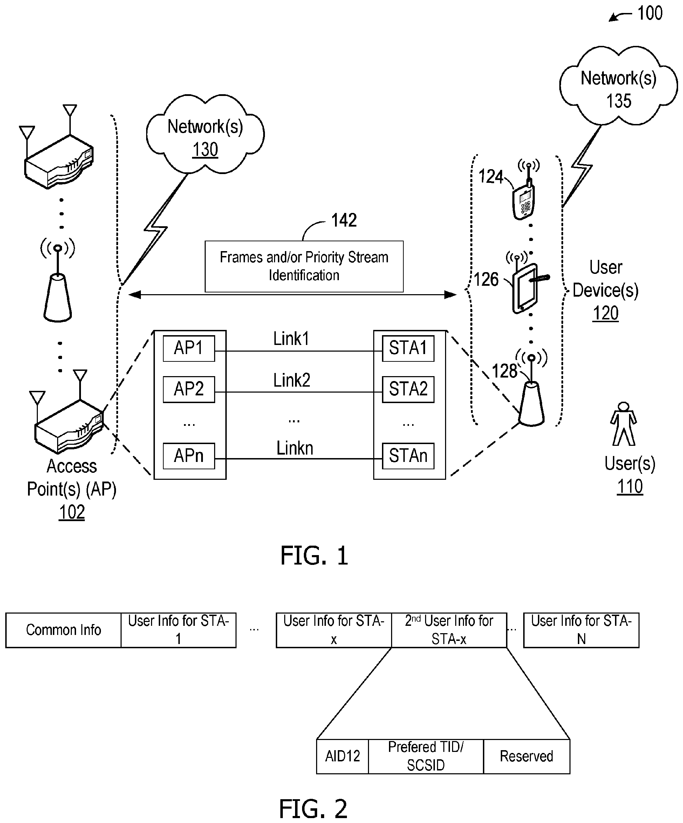

FIG. 1 is a network diagram illustrating an example network environment, related to the aspects of i) traffic information signaling; and/or ii) priority stream identification, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

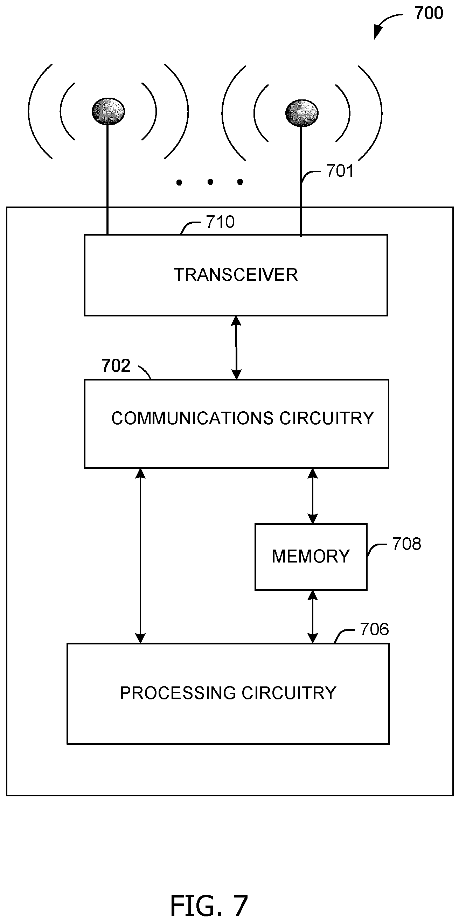

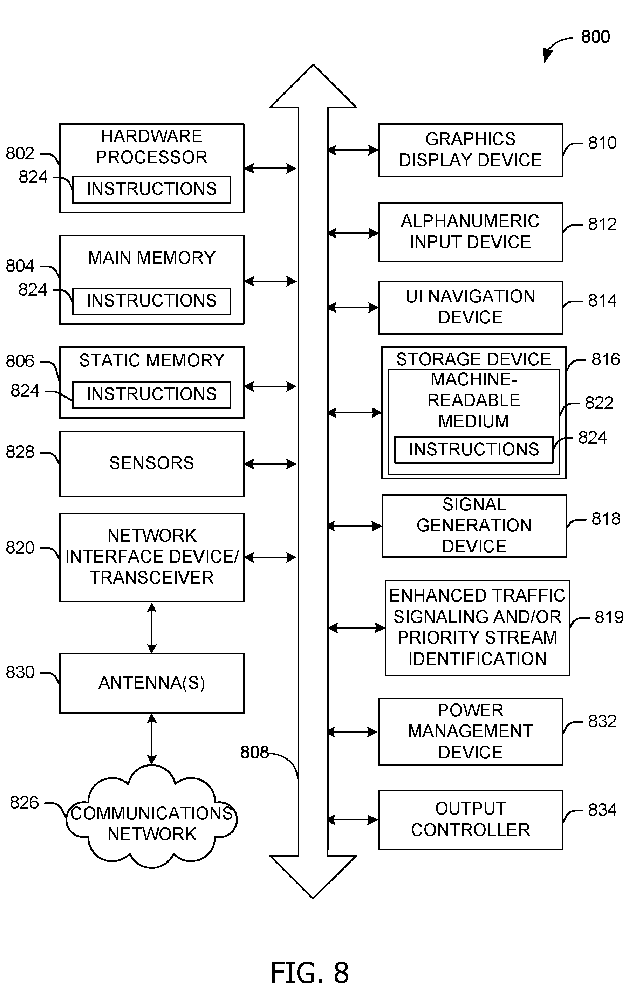

In some embodiments, the user devices 120 and the AP 102 may include one or more computer systems similar to that of the functional diagram of FIG. 7 and/or the example machine/system of FIG. 8.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, 802.11bn, etc.), 6 GHz channels (e.g., 802.11ax, 802.11be, 802.11bn, etc.), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, especially related to the aspects of i) traffic information signaling, and with reference to FIG. 1, a user device 120 may be in communication with one or more APs 102. For example, one or more APs 102 may exchange frames 142 (e.g., trigger frames, PPDUs, MSDUs, MUR RTS TXS frames, and the like as described herein) with one or more user devices 120. Alternatively or in addition, the frames 142 may be exchanged between the APs 102 (e.g., for TXOP sharing) and/or between the user devices 120 (e.g., peer-to-peer). It is understood that the above descriptions are for the purposes of illustration and are not meant to be limiting.

It is understood that the above descriptions are for the purposes of illustration and are not meant to be limiting. Aspects related to the traffic information signaling further include the following until priority stream identification related aspects:
FIG. 2 illustrates an example portion of a basic trigger frame format in which a preferred flow identifier is signaled inside a second User Information field for a given STA, in accordance with one or more example embodiments related to traffic information signaling of the present disclosure.

Referring to FIG. 2, the basic trigger frame may include a Common Information field with information for all recipients, and User Information fields 1-N addressed to specific STAs. To signal the preferred TID in the basic trigger frame, a second User Information field may be addressed to a same STA (e.g., STA-x) so that multiple User Information fields are addressed to STA-x. The second User Information field for STA-x may include the address identifier (AID12) of the STA-x, signaling of the preferred TID/SCSID, and reserved bits. The number of reserved bits may be enough to even signal a preferred SCSID of one octet.

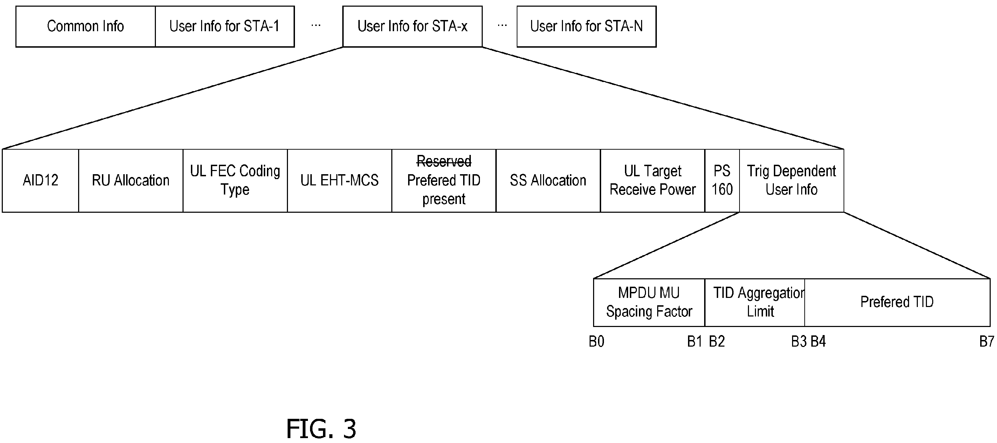

FIG. 3 illustrates an example portion of a trigger frame format in which a preferred TID is signaled inside a second User Information field for a given STA, in accordance with one or more example embodiments of the present disclosure.

Referring to FIG. 3, the basic trigger frame may include a Common Information field with information for all recipients, and User Information fields 1-N addressed to specific STAs. One reserved bit in the User Information field may be used to signal that the Trigger Dependent User Information contains a Preferred TID info while the Trigger Dependent User Information itself signals the Preferred TID. In this case the bits B4-B7 in baseline Trigger Dependent User Information field for Basic Trigger frame is repurposed to signal a Preferred TID and the range of TID Aggregation Limit is reduced from 4 to 8. For the case when a TID contains only traffic for a given SCS flow this unambiguously signals the QoS flow to a STA.

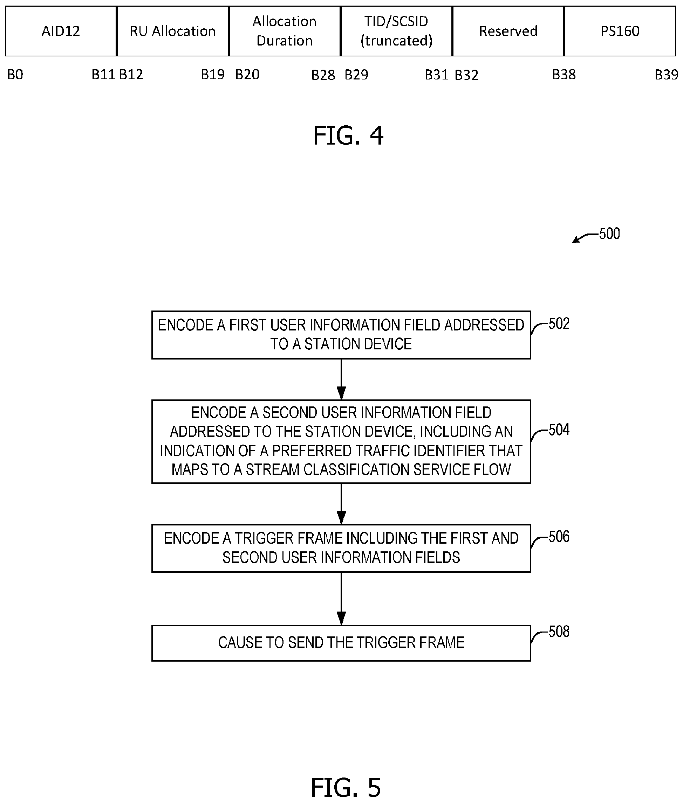

FIG. 4 illustrates an example format of an extremely high throughput (EHT) variant User Information field format in a multi-user (MU) request to send (RTS) transmissions (TXS) trigger frame to signal a TID or truncated SCSID, in accordance with one or more example embodiments of the present disclosure.

Referring to FIG. 3, the Preferred TID or SCSID information is signaled in the User Information field of an MU-RTS TXS frame. 802.11 could define two usages for this information:
(1) 802.11 could indicate that this is a SCSID in which case the SCSID negotiated by the STA for P2P/in-BSS traffic (and possibly UL) will be limited to fit the size of the field in the User Info field. For example, if there are 3 bits used (as in the figure) in the User Info, then the STA can only negotiate upto 8 P2P/ in-BSS/ UL SCS flows with the infra-AP.

802.11 could indicate that this is a TID value indicated in the QoS Characteristics element signaled by the STA for P2P/in-BSS traffic. In this case the STA could decouple the value of the TID in the QoS Characteristics element from the UP value even for Direct link/ P2P traffic. FIG. 5 illustrates a flow diagram of a process 500 for signaling traffic information, in accordance with one or more example embodiments of the present disclosure.

At block 502, a device (e.g., the AP 102 of FIG. 1 and/or the enhanced traffic signaling device 819 of FIG. 8) may encode a first user information field for a trigger frame.

At block 504, the device may encode a second user information field for the trigger frame, where the first and second user information fields both are addressed to a same STA, and where the second user information field signals a Preferred TID that maps to a SCS flow.

At block 506, the device may encode the trigger frame, either a basic trigger frame or a MU RTS TXS trigger frame, including the user information fields.

At block 508, the device may cause to send the trigger frame.

It is understood that the above descriptions are for the purposes of illustration and are not meant to be limiting.

In one embodiment, especially related to the aspects of ii) priority stream identification, and with reference to FIG. 1, a user device 120 may be in communication with one or more APs 102. For example, one or more APs 102 may implement a priority stream identification 142 with one or more user devices 120. The one or more APs 102 may be multi-link devices (MLDs) and the one or more user device 120 may be non-AP MLDs. Each of the one or more APs 102 may comprise a plurality of individual APs (e.g., AP1, AP2, ..., APn, where n is an integer) and each of the one or more user devices 120 may comprise a plurality of individual STAs (e.g., STA1, STA2, ..., STAn). The AP MLDs and the non-AP MLDs may set up one or more links (e.g., Link1, Link2, ..., Linkn) between each of the individual APs and STAs. It is understood that the above descriptions are for the purposes of illustration and are not meant to be limiting.

In one or more embodiments, a priority stream identification system may facilitate to add some information in the MAC header of the QoS Data frame that differentiates flows mapped to that TID that belong to some SCS flow versus others.

In one embodiment the solution could be the MSB of the TID subfield in the QoS Control field i.e., if that bit is set to 0, then this is a non-QoS traffic and if it is set to 1, then this is a QoS traffic. The bits 0-2 of the baseline TID field therefore signal the UP/ TID.

Note that this is not same as using a new TID in range 8-15 since the existing TID space between 0-7 is reused and converting the unused MSB to a new field.

In one embodiment if a STA never intends to mix regular BE or BK traffic with a high priority VO/VI traffic in same TID, then it indicates the same in the SCS Request by using some field in the QoS Characteristics element or elsewhere.

In one embodiment a STA may signal during association (e.g., in a Capabilities element) that it always uses one TID for regular BE (e.g., TID-0) and BK (e.g., TID-1) traffic respectively and the other one is used for a high priority flow (statically or following an SCS stream setup).

It is understood that the above descriptions are for the purposes of illustration and are not meant to be limiting.

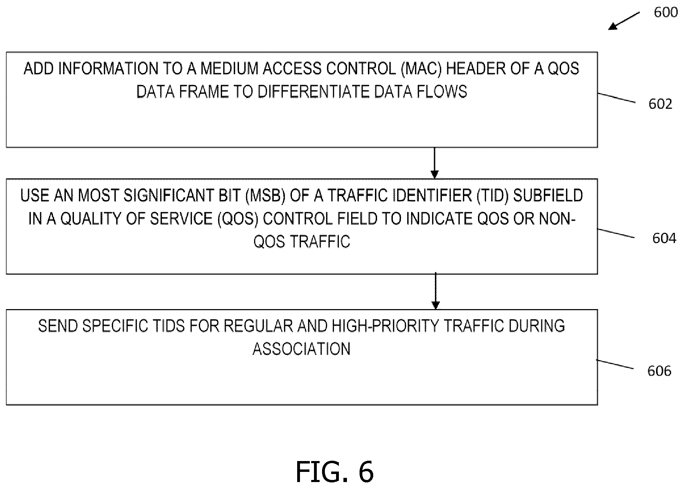

FIG. 6 illustrates a flow diagram of illustrative process 600 for a priority stream identification system, in accordance with one or more example embodiments of the present disclosure.

At block 602, a device (e.g., the user device(s) 120 and/or the AP 102 of FIG. 1 and/or the priority stream identification device 819 of FIG. 8) may add information to a medium access control (MAC) header of a QoS Data frame to differentiate data flows.

At block 604, the device may use an most significant bit (MSB) of a traffic identifier (TID) subfield in a quality of service (QoS) Control field to indicate QoS or non-QoS traffic.

At block 606, the device may send specific TIDs for regular and high-priority traffic during association.

It is understood that the above descriptions are for the purposes of illustration and are not meant to be limiting.

The following paragraphs relate to both i) traffic information signaling; and ii) priority stream identification aspects unless indicated otherwise.

FIG. 7 shows a functional diagram of an exemplary communication station 700, in accordance with one or more example embodiments of the present disclosure. In one embodiment, FIG. 7 illustrates a functional block diagram of a communication station that may be suitable for use as an AP 102 (FIG. 1) or a user device 120 (FIG. 1) in accordance with some embodiments. The communication station 700 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 700 may include communications circuitry 702 and a transceiver 710 for transmitting and receiving signals to and from other communication stations using one or more antennas 701. The communications circuitry 702 may include circuitry that can operate the physical layer (PHY) communications and/or medium access control (MAC) communications for controlling access to the wireless medium, and/or any other communications layers for transmitting and receiving signals. The communication station 700 may also include processing circuitry 706 and memory 708 arranged to perform the operations described herein. In some embodiments, the communications circuitry 702 and the processing circuitry 706 may be configured to perform operations detailed in the above figures, diagrams, and flows.

In accordance with some embodiments, the communications circuitry 702 may be arranged to contend for a wireless medium and configure frames or packets for communicating over the wireless medium. The communications circuitry 702 may be arranged to transmit and receive signals. The communications circuitry 702 may also include circuitry for modulation/demodulation, upconversion/downconversion, filtering, amplification, etc. In some embodiments, the processing circuitry 706 of the communication station 700 may include one or more processors. In other embodiments, two or more antennas 701 may be coupled to the communications circuitry 702 arranged for sending and receiving signals. The memory 708 may store information for configuring the processing circuitry 706 to perform operations for configuring and transmitting message frames and performing the various operations described herein. The memory 708 may include any type of memory, including non-transitory memory, for storing information in a form readable by a machine (e.g., a computer). For example, the memory 708 may include a computer-readable storage device, read-only memory (ROM), random-access memory (RAM), magnetic disk storage media, optical storage media, flash-memory devices and other storage devices and media.

In some embodiments, the communication station 700 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 700 may include one or more antennas 701. The antennas 701 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 700 may include one or more of a keyboard, a display, a non-volatile memory port, multiple antennas, a graphics processor, an application processor, speakers, and other mobile device elements. The display may be an LCD screen including a touch screen.

Although the communication station 700 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 700 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 700 may include one or more processors and may be configured with instructions stored on a computer-readable storage device.

FIG. 8 illustrates a block diagram of an example of a machine 800 or system upon which any one or more of the techniques (e.g., methodologies) discussed herein may be performed. In other embodiments, the machine 800 may operate as a standalone device or may be connected (e.g., networked) to other machines. In a networked deployment, the machine 800 may operate in the capacity of a server machine, a client machine, or both in server-client network environments. In an example, the machine 800 may act as a peer machine in peer-to-peer (P2P) (or other distributed) network environments. The machine 800 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 800 may include a hardware processor 802 (e.g., a central processing unit (CPU), a graphics processing unit (GPU), a hardware processor core, or any combination thereof), a main memory 804 and a static memory 806, some or all of which may communicate with each other via an interlink (e.g., bus) 808. The machine 800 may further include a power management device 832, a graphics display device 810, an alphanumeric input device 812 (e.g., a keyboard), and a user interface (UI) navigation device 814 (e.g., a mouse). In an example, the graphics display device 810, alphanumeric input device 812, and UI navigation device 814 may be a touch screen display. The machine 800 may additionally include a storage device (i.e., drive unit) 816, a signal generation device 818 (e.g., a speaker), an enhanced traffic signaling device and/or priority stream identification device 819, a network interface device/transceiver 820 coupled to antenna(s) 830, and one or more sensors 828, such as a global positioning system (GPS) sensor, a compass, an accelerometer, or other sensor. The machine 800 may include an output controller 834, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 802 for generation and processing of the baseband signals and for controlling operations of the main memory 804, the storage device 816, and/or the enhanced traffic signaling and/or priority stream identification device 819. The baseband processor may be provided on a single radio card, a single chip, or an integrated circuit (IC).

The storage device 816 may include a machine readable medium 822 on which is stored one or more sets of data structures or instructions 824 (e.g., software) embodying or utilized by any one or more of the techniques or functions described herein. The instructions 824 may also reside, completely or at least partially, within the main memory 804, within the static memory 806, or within the hardware processor 802 during execution thereof by the machine 800. In an example, one or any combination of the hardware processor 802, the main memory 804, the static memory 806, or the storage device 816 may constitute machine-readable media.

The enhanced traffic signaling and/or priority stream identification device 819 may carry out or perform any of the operations and processes (e.g., process 500 and/or process 600 respectively) described and shown above.

It is understood that the above are only a subset of what the enhanced traffic signaling and/or priority stream identification 819 may be configured to perform and that other functions included throughout this disclosure may also be performed by the enhanced traffic signaling and/or priority stream identification device 819.

While the machine-readable medium 822 is illustrated as a single medium, the term "machine-readable medium" may include a single medium or multiple media (e.g., a centralized or distributed database, and/or associated caches and servers) configured to store the one or more instructions 824.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 800 and that cause the machine 800 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 824 may further be transmitted or received over a communications network 826 using a transmission medium via the network interface device/transceiver 820 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 820 may include one or more physical jacks (e.g., Ethernet, coaxial, or phone jacks) or one or more antennas to connect to the communications network 826. In an example, the network interface device/transceiver 820 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 800 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

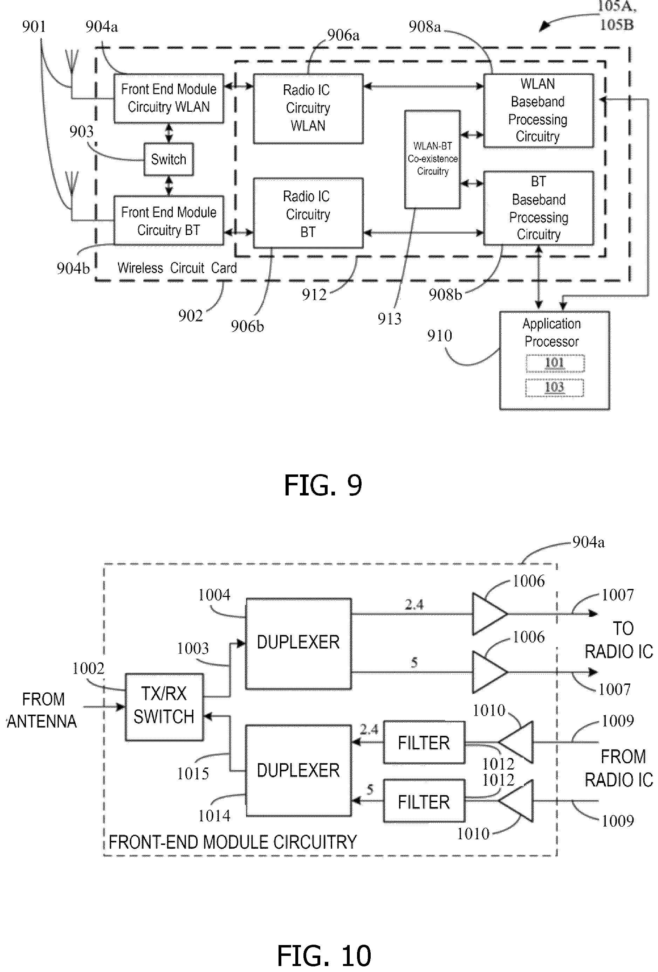

FIG. 9 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 904a-b, radio IC circuitry 906a-b and baseband processing circuitry 908a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 904a-b may include a WLAN or Wi-Fi FEM circuitry 904a and a Bluetooth (BT) FEM circuitry 904b. The WLAN FEM circuitry 904a may include a receive signal path comprising circuitry configured to operate on WLAN RF signals received from one or more antennas 901, to amplify the received signals and to provide the amplified versions of the received signals to the WLAN radio IC circuitry 906a for further processing. The BT FEM circuitry 904b may include a receive signal path which may include circuitry configured to operate on BT RF signals received from one or more antennas 901, to amplify the received signals and to provide the amplified versions of the received signals to the BT radio IC circuitry 906b for further processing. FEM circuitry 904a may also include a transmit signal path which may include circuitry configured to amplify WLAN signals provided by the radio IC circuitry 906a for wireless transmission by one or more of the antennas 901. In addition, FEM circuitry 904b may also include a transmit signal path which may include circuitry configured to amplify BT signals provided by the radio IC circuitry 906b for wireless transmission by the one or more antennas. In the embodiment of FIG. 9, although FEM 904a and FEM 904b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 906a-b as shown may include WLAN radio IC circuitry 906a and BT radio IC circuitry 906b. The WLAN radio IC circuitry 906a may include a receive signal path which may include circuitry to down-convert WLAN RF signals received from the FEM circuitry 904a and provide baseband signals to WLAN baseband processing circuitry 908a. BT radio IC circuitry 906b may in turn include a receive signal path which may include circuitry to down-convert BT RF signals received from the FEM circuitry 904b and provide baseband signals to BT baseband processing circuitry 908b. WLAN radio IC circuitry 906a may also include a transmit signal path which may include circuitry to up-convert WLAN baseband signals provided by the WLAN baseband processing circuitry 908a and provide WLAN RF output signals to the FEM circuitry 904a for subsequent wireless transmission by the one or more antennas 901. BT radio IC circuitry 906b may also include a transmit signal path which may include circuitry to up-convert BT baseband signals provided by the BT baseband processing circuitry 908b and provide BT RF output signals to the FEM circuitry 904b for subsequent wireless transmission by the one or more antennas 901. In the embodiment of FIG. 9, although radio IC circuitries 906a and 906b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 908a-b may include a WLAN baseband processing circuitry 908a and a BT baseband processing circuitry 908b. The WLAN baseband processing circuitry 908a may include a memory, such as, for example, a set of RAM arrays in a Fast Fourier Transform or Inverse Fast Fourier Transform block (not shown) of the WLAN baseband processing circuitry 908a. Each of the WLAN baseband circuitry 908a and the BT baseband circuitry 908b may further include one or more processors and control logic to process the signals received from the corresponding WLAN or BT receive signal path of the radio IC circuitry 906a-b, and to also generate corresponding WLAN or BT baseband signals for the transmit signal path of the radio IC circuitry 906a-b. Each of the baseband processing circuitries 908a and 908b may further include physical layer (PHY) and medium access control layer (MAC) circuitry, and may further interface with a device for generation and processing of the baseband signals and for controlling operations of the radio IC circuitry 906a-b.

Referring still to FIG. 9, according to the shown embodiment, WLAN-BT coexistence circuitry 913 may include logic providing an interface between the WLAN baseband circuitry 908a and the BT baseband circuitry 908b to enable use cases requiring WLAN and BT coexistence. In addition, a switch 903 may be provided between the WLAN FEM circuitry 904a and the BT FEM circuitry 904b to allow switching between the WLAN and BT radios according to application needs. In addition, although the antennas 901 are depicted as being respectively connected to the WLAN FEM circuitry 904a and the BT FEM circuitry 904b, embodiments include within their scope the sharing of one or more antennas as between the WLAN and BT FEMs, or the provision of more than one antenna connected to each of FEM 904a or 904b.

In some embodiments, the front-end module circuitry 904a-b, the radio IC circuitry 906a-b, and baseband processing circuitry 908a-b may be provided on a single radio card, such as wireless radio card 902. In some other embodiments, the one or more antennas 901, the FEM circuitry 904a-b and the radio IC circuitry 906a-b may be provided on a single radio card. In some other embodiments, the radio IC circuitry 906a-b and the baseband processing circuitry 908a-b may be provided on a single chip or integrated circuit (IC), such as IC 912.

In some embodiments, the wireless radio card 902 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 6, the BT baseband circuitry 908b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies, however.

FIG. 10 illustrates WLAN FEM circuitry 904a in accordance with some embodiments. Although the example of FIG. 10 is described in conjunction with the WLAN FEM circuitry 904a, the example of FIG. 10 may be described in conjunction with the example BT FEM circuitry 904b (FIG. 9), although other circuitry configurations may also be suitable.

In some embodiments, the FEM circuitry 904a may include a TX/RX switch 1002 to switch between transmit mode and receive mode operation. The FEM circuitry 904a may include a receive signal path and a transmit signal path. The receive signal path of the FEM circuitry 904a may include a low-noise amplifier (LNA) 1006 to amplify received RF signals 1003 and provide the amplified received RF signals 1007 as an output (e.g., to the radio IC circuitry 906a-b (FIG. 9)). The transmit signal path of the circuitry 904a may include a power amplifier (PA) to amplify input RF signals 1009 (e.g., provided by the radio IC circuitry 906a-b), and one or more filters 1012, such as band-pass filters (BPFs), low-pass filters (LPFs) or other types of filters, to generate RF signals 1015 for subsequent transmission (e.g., by one or more of the antennas 901 (FIG. 9)) via an example duplexer 1014.

In some dual-mode embodiments for Wi-Fi communication, the FEM circuitry 904a may be configured to operate in either the 2.4 GHz frequency spectrum or the 5 GHz frequency spectrum. In these embodiments, the receive signal path of the FEM circuitry 904a may include a receive signal path duplexer 1004 to separate the signals from each spectrum as well as provide a separate LNA 1006 for each spectrum as shown. In these embodiments, the transmit signal path of the FEM circuitry 904a may also include a power amplifier 1010 and a filter 1012, such as a BPF, an LPF or another type of filter for each frequency spectrum and a transmit signal path duplexer 1004 to provide the signals of one of the different spectrums onto a single transmit path for subsequent transmission by the one or more of the antennas 901 (FIG. 9). In some embodiments, BT communications may utilize the 2.4 GHz signal paths and may utilize the same FEM circuitry 904a as the one used for WLAN communications.

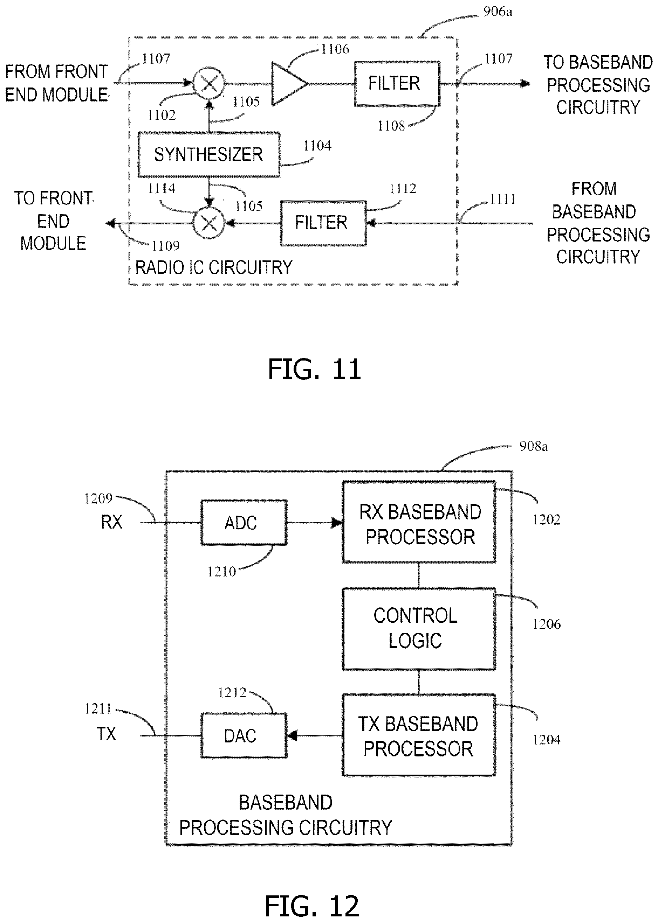

FIG. 11 illustrates radio IC circuitry 906a in accordance with some embodiments. The radio IC circuitry 906a is one example of circuitry that may be suitable for use as the WLAN or BT radio IC circuitry 906a/906b (FIG. 9), although other circuitry configurations may also be suitable. Alternatively, the example of FIG. 11 may be described in conjunction with the example BT radio IC circuitry 906b.

In some embodiments, the radio IC circuitry 906a may include a receive signal path and a transmit signal path. The receive signal path of the radio IC circuitry 906a may include at least mixer circuitry 1102, such as, for example, down-conversion mixer circuitry, amplifier circuitry 1106 and filter circuitry 1108. The transmit signal path of the radio IC circuitry 906a may include at least filter circuitry 1112 and mixer circuitry 1114, such as, for example, up-conversion mixer circuitry. Radio IC circuitry 906a may also include synthesizer circuitry 1104 for synthesizing a frequency 1105 for use by the mixer circuitry 1102 and the mixer circuitry 1114. The mixer circuitry 1102 and/or 1114 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 11 illustrates only a simplified version of a radio IC circuitry, and may include, although not shown, embodiments where each of the depicted circuitries may include more than one component. For instance, mixer circuitry 1114 may each include one or more mixers, and filter circuitries 1108 and/or 1112 may each include one or more filters, such as one or more BPFs and/or LPFs according to application needs. For example, when mixer circuitries are of the direct-conversion type, they may each include two or more mixers.

In some embodiments, mixer circuitry 1102 may be configured to down-convert RF signals 1007 received from the FEM circuitry 904a-b (FIG. 9) based on the synthesized frequency 1105 provided by synthesizer circuitry 1104. The amplifier circuitry 1106 may be configured to amplify the down-converted signals and the filter circuitry 1108 may include an LPF configured to remove unwanted signals from the down-converted signals to generate output baseband signals 1107. Output baseband signals 1107 may be provided to the baseband processing circuitry 908a-b (FIG. 9) for further processing. In some embodiments, the output baseband signals 1107 may be zero-frequency baseband signals, although this is not a requirement. In some embodiments, mixer circuitry 1102 may comprise passive mixers, although the scope of the embodiments is not limited in this respect.

In some embodiments, the mixer circuitry 1114 may be configured to up-convert input baseband signals 1111 based on the synthesized frequency 1105 provided by the synthesizer circuitry 1104 to generate RF output signals 1009 for the FEM circuitry 904a-b. The baseband signals 1111 may be provided by the baseband processing circuitry 908a-b and may be filtered by filter circuitry 1112. The filter circuitry 1112 may include an LPF or a BPF, although the scope of the embodiments is not limited in this respect.

In some embodiments, the mixer circuitry 1102 and the mixer circuitry 1114 may each include two or more mixers and may be arranged for quadrature down-conversion and/or up-conversion respectively with the help of synthesizer 1104. In some embodiments, the mixer circuitry 1102 and the mixer circuitry 1114 may each include two or more mixers each configured for image rejection (e.g., Hartley image rejection). In some embodiments, the mixer circuitry 1102 and the mixer circuitry 1114 may be arranged for direct down-conversion and/or direct up-conversion, respectively. In some embodiments, the mixer circuitry 1102 and the mixer circuitry 1114 may be configured for super-heterodyne operation, although this is not a requirement.

Mixer circuitry 1102 may comprise, according to one embodiment: quadrature passive mixers (e.g., for the in-phase (I) and quadrature phase (Q) paths). In such an embodiment, RF input signal 1007 from FIG. 11 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 1105 of synthesizer 1104 (FIG. 11). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 1007 (FIG. 10) may comprise a balanced signal, although the scope of the embodiments is not limited in this respect. The I and Q baseband output signals may be provided to low-noise amplifier, such as amplifier circuitry 1106 (FIG. 11) or to filter circuitry 1108 (FIG. 11).

In some embodiments, the output baseband signals 1107 and the input baseband signals 1111 may be analog baseband signals, although the scope of the embodiments is not limited in this respect. In some alternate embodiments, the output baseband signals 1107 and the input baseband signals 1111 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 1104 may be a fractional-N synthesizer or a fractional N/N+1 synthesizer, although the scope of the embodiments is not limited in this respect as other types of frequency synthesizers may be suitable. For example, synthesizer circuitry 1104 may be a delta-sigma synthesizer, a frequency multiplier, or a synthesizer comprising a phase-locked loop with a frequency divider. According to some embodiments, the synthesizer circuitry 1104 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 1104 may be provided by a voltage controlled oscillator (VCO), although that is not a requirement. A divider control input may further be provided by either the baseband processing circuitry 908a-b (FIG. 9) depending on the desired output frequency 1105. In some embodiments, a divider control input (e.g., N) may be determined from a look-up table (e.g., within a Wi-Fi card) based on a channel number and a channel center frequency as determined or indicated by the example application processor 910. The application processor 910 may include, or otherwise be connected to, one of the example secure signal converter 101 or the example received signal converter 103 (e.g., depending on which device the example radio architecture is implemented in).

In some embodiments, synthesizer circuitry 1104 may be configured to generate a carrier frequency as the output frequency 1105, while in other embodiments, the output frequency 1105 may be a fraction of the carrier frequency (e.g., one-half the carrier frequency, one-third the carrier frequency). In some embodiments, the output frequency 1105 may be a LO frequency (fLO).

FIG. 12 illustrates a functional block diagram of baseband processing circuitry 908a in accordance with some embodiments. The baseband processing circuitry 908a is one example of circuitry that may be suitable for use as the baseband processing circuitry 908a (FIG. 9), although other circuitry configurations may also be suitable. Alternatively, the example of FIG. 11 may be used to implement the example BT baseband processing circuitry 908b of FIG. 9.

The baseband processing circuitry 908a may include a receive baseband processor (RX BBP) 1202 for processing receive baseband signals 1109 provided by the radio IC circuitry 906a-b (FIG. 9) and a transmit baseband processor (TX BBP) 1204 for generating transmit baseband signals 1111 for the radio IC circuitry 906a-b. The baseband processing circuitry 908a may also include control logic 1206 for coordinating the operations of the baseband processing circuitry 908a.

In some embodiments (e.g., when analog baseband signals are exchanged between the baseband processing circuitry 908a-b and the radio IC circuitry 906a-b), the baseband processing circuitry 908a may include ADC 1210 to convert analog baseband signals 1209 received from the radio IC circuitry 906a-b to digital baseband signals for processing by the RX BBP 1202. In these embodiments, the baseband processing circuitry 908a may also include DAC 1212 to convert digital baseband signals from the TX BBP 1204 to analog baseband signals 1211.

In some embodiments that communicate OFDM signals or OFDMA signals, such as through baseband processor 908a, the transmit baseband processor 1204 may be configured to generate OFDM or OFDMA signals as appropriate for transmission by performing an inverse fast Fourier transform (IFFT). The receive baseband processor 1202 may be configured to process received OFDM signals or OFDMA signals by performing an FFT. In some embodiments, the receive baseband processor 1202 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 9, in some embodiments, the antennas 901 (FIG. 9) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 901 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments.

Example 1 may include an apparatus for an access point (AP) device for enabling lite trigger-based channel access, the apparatus comprising processing circuitry coupled to storage, the processing circuitry configured to: encode a trigger frame comprising a common information field for all station devices addressed by the trigger frame, a user information field signaling a resource allocation for a station device addressed by the trigger frame, and a special user information field signaling that the resource allocation will be persistent for a time period; cause the AP device to send the trigger frame; cause the AP device to send a resource allocation frame to the station device, the resource allocation frame signaling that a lite-trigger frame, smaller than the trigger frame, will be transmitted by the AP device during the time period; encode the lite-trigger frame, wherein the lite-trigger frame comprises an indication of the resource allocation; and cause the AP device to send the lite-trigger frame during the time period after the resource allocation frame.

Example 2 may include the apparatus of example 1 and/or any other example herein, wherein the special user information field comprises the indication of the resource allocation and a periodicity of the lite-trigger frame.

Example 3 may include the apparatus of example 1 and/or any other example herein, wherein the processing circuitry is further configured to cause the AP device to send a second trigger frame comprising a special user information field comprising the indication of the resource allocation.

Example 4 may include the apparatus of example 1 and/or any other example herein, wherein the indication of the resource allocation is unique across a basis service set comprising the station devices addressed by the trigger frame.

Example 5 may include the apparatus of example 1 and/or any other example herein, wherein the trigger frame further comprises additional uplink orthogonal frequency division multiple access (OFDMA) parameters that the lite-trigger frame is to signal dynamically.

Example 6 may include the apparatus of example 1 and/or any other example herein, wherein the lite-trigger frame is an initial control frame when the station devices addressed by the trigger frame are operating in an enhanced multilink single-radio (EMLSR) mode.

Example 7 may include the apparatus of example 1 and/or any other example herein, wherein the resource allocation frame indicates that the station devices addressed by the trigger frame are expected to not be in a EMLSR mode when the lite-trigger frame is transmitted.

Example 8 may include the apparatus of example 1 and/or any other example herein, wherein the lite-trigger frame is a multi-user (MU) request-to-send (RTS) trigger frame sub-variant or a basic trigger frame sub-variant.

Example 9 may include the apparatus of example 1 and/or any other example herein, wherein the lite-trigger frame updates an uplink length parameter dynamically.

Example 10 may include the apparatus of example 1 and/or any other example herein, wherein the lite-trigger frame further comprises a one-bit indicator of whether a common information field is present or not in the lite-trigger frame.

Example 11 may include the apparatus of example 1 and/or any other example herein, wherein the lite-trigger frame further comprises a one-bit indicator of whether a user information field is present or not in the lite-trigger frame.

Example 12 may include the apparatus of example 11 and/or any other example herein, wherein the one-bit indicator indicates that the user information field is present in the lite-trigger frame, wherein the lite-trigger frame is a basic trigger frame sub-variant, and wherein the lite-trigger frame uses a same control frame protection scheme and the trigger frame.

Example 13 may include the apparatus of example 1 and/or any other example herein, further comprising a transceiver configured to transmit and receive wireless signals comprising the trigger frame and the lite-trigger frame.

Example 14 may include the apparatus of example 13 and/or any other example herein, further comprising an antenna coupled to the transceiver to cause to send the trigger frame and the lite-trigger frame.

Example 15 may include a non-transitory computer-readable medium storing computer-executable instructions which when executed by processing circuitry of an access point (AP) device result in performing operations comprising: encoding a trigger frame comprising a common information field for all station devices addressed by the trigger frame, a user information field signaling a resource allocation for a station device addressed by the trigger frame, and a special user information field signaling that the resource allocation will be persistent for a time period; causing the AP device to send the trigger frame; causing the AP device to send a resource allocation frame to the station device, the resource allocation frame signaling that a lite-trigger frame, smaller than the trigger frame, will be transmitted by the AP device during the time period; encoding the lite-trigger frame, wherein the lite-trigger frame comprises an indication of the resource allocation; and causing the AP device to send the lite-trigger frame during the time period after the resource allocation frame.

Example 16 may include the non-transitory computer-readable medium of example 15 and/or any other example herein, wherein the special user information field comprises the indication of the resource allocation and a periodicity of the lite-trigger frame.

Example 17 may include the non-transitory computer-readable medium of example 15 and/or any other example herein, the operations further comprising causing the AP device to send a second trigger frame comprising a special user information field comprising the indication of the resource allocation.

Example 18 may include the non-transitory computer-readable medium of example 15 and/or any other example herein, wherein the indication of the resource allocation is unique across a basis service set comprising the station devices addressed by the trigger frame.

Example 19 may include the non-transitory computer-readable medium of example 15 and/or any other example herein, wherein the trigger frame further comprises additional uplink orthogonal frequency division multiple access (OFDMA) parameters that the lite-trigger frame is to signal dynamically.

Example 20 may include a method for enabling lite trigger-based channel access, the method comprising: encoding, by processing circuitry of an access point (AP) device, a trigger frame comprising a common information field for all station devices addressed by the trigger frame, a user information field signaling a resource allocation for a station device addressed by the trigger frame, and a special user information field signaling that the resource allocation will be persistent for a time period; causing, by the processing circuitry, the AP device to send the trigger frame; causing, by the processing circuitry, the AP device to send a resource allocation frame to the station device, the resource allocation frame signaling that a lite-trigger frame, smaller than the trigger frame, will be transmitted by the AP device during the time period; encoding, by the processing circuitry, the lite-trigger frame, wherein the lite-trigger frame comprises an indication of the resource allocation; and causing, by the processing circuitry, the AP device to send the lite-trigger frame during the time period after the resource allocation frame.

Example 21 may include an apparatus comprising means for: encoding, by an access point (AP) device, a trigger frame comprising a common information field for all station devices addressed by the trigger frame, a user information field signaling a resource allocation for a station device addressed by the trigger frame, and a special user information field signaling that the resource allocation will be persistent for a time period; causing the AP device to send the trigger frame; causing the AP device to send a resource allocation frame to the station device, the resource allocation frame signaling that a lite-trigger frame, smaller than the trigger frame, will be transmitted by the AP device during the time period; encoding the lite-trigger frame, wherein the lite-trigger frame comprises an indication of the resource allocation; and causing the AP device to send the lite-trigger frame during the time period after the resource allocation frame.

Example 22 may include a device comprising processing circuitry coupled to storage, the processing circuitry configured to: add information to a medium access control (MAC) header of a QoS Data frame to differentiate data flows; use a most significant bit (MSB) of a traffic identifier (TID) subfield in a quality of service (QoS) Control field to indicate QoS or non-QoS traffic; and send specific TIDs for regular and high-priority traffic during association.

Example 23 may include the device of example 22 and/or some other example herein, wherein the processing circuitry may be further configured to use existing TID space by converting an unused MSB into a new field.

Example 24 may include the device of example 22 and/or some other example herein, wherein the processing circuitry may be further configured to assign TID-0 for regular BE traffic and TID-1 for BK traffic.

Example 25 may include the device of example 22 and/or some other example herein, further comprising a transceiver configured to transmit and receive wireless signals.

Example 26 may include the device of example 25 and/or some other example herein, further comprising an antenna coupled to the transceiver to cause to send a frame.

Example 27 may include a non-transitory computer-readable medium storing computer-executable instructions which when executed by one or more processors result in performing operations comprising: adding information to a medium access control (MAC) header of a QoS Data frame to differentiate data flows; using a most significant bit (MSB) of a traffic identifier (TID) subfield in a quality of service (QoS) Control field to indicate QoS or non-QoS traffic; and sending specific TIDs for regular and high-priority traffic during association.

Example 28 may include the non-transitory computer-readable medium of example 27 and/or some other example herein, wherein the operations further comprise using existing TID space by converting an unused MSB into a new field.

Example 29 may include the non-transitory computer-readable medium of example 27 and/or some other example herein, wherein the operations further comprise assigning TID-0 for regular BE traffic and TID-1 for BK traffic.

Example 30 may include a method comprising: adding information to a medium access control (MAC) header of a QoS Data frame to differentiate data flows; using a most significant bit (MSB) of a traffic identifier (TID) subfield in a quality of service (QoS) Control field to indicate QoS or non-QoS traffic; and sending specific TIDs for regular and high-priority traffic during association.

Example 31 may include the method of example 30 and/or some other example herein, further comprising using existing TID space by converting an unused MSB into a new field.

Example 32 may include the method of example 30 and/or some other example herein, further comprising assigning TID-0 for regular BE traffic and TID-1 for BK traffic.

Example 33 may include an apparatus comprising means for: adding information to a medium access control (MAC) header of a QoS Data frame to differentiate data flows; using a most significant bit (MSB) of a traffic identifier (TID) subfield in a quality of service (QoS) Control field to indicate QoS or non-QoS traffic; and sending specific TIDs for regular and high-priority traffic during association.

Example 34 may include the apparatus of example 33 and/or some other example herein, further comprising using existing TID space by converting an unused MSB into a new field.

Example 35 may include the apparatus of example 33 and/or some other example herein, further comprising assigning TID-0 for regular BE traffic and TID-1 for BK traffic.

Example 36 may include one or more non-transitory computer-readable media comprising instructions to cause an electronic device, upon execution of the instructions by one or more processors of the electronic device, to perform one or more elements of a method described in or related to any of examples 22-35, or any other method or process described herein.

Example 37 may include an apparatus comprising logic, modules, and/or circuitry to perform one or more elements of a method described in or related to any of examples 22-35, or any other method or process described herein.

Example 38 may include a method, technique, or process as described in or related to any of examples 22-35, or portions or parts thereof.

Example 39 may include an apparatus comprising: one or more processors and one or more computer readable media comprising instructions that, when executed by the one or more processors, cause the one or more processors to perform the method, techniques, or process as described in or related to any of examples 22-35, or portions thereof.

Example 40 may include a method of communicating in a wireless network as shown and described herein.

Example 41 may include a system for providing wireless communication as shown and described herein.

Example 42 may include a device for providing wireless communication as shown and described herein.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. An apparatus for an access point, AP, the apparatus comprising processing circuitry coupled to storage, the processing circuitry configured to:
encode a buffer status report poll, BSRP, trigger frame for transmission to a recipient AP, wherein the BSRP trigger frame comprises a user information field comprising information representing a flow that the AP requests to schedule during a transmission opportunity, TXOP;
instruct to transmit the BSRP trigger frame to the recipient AP.

2. The apparatus of claim 1, wherein the BSRP trigger frame is encoded to announce the schedule to the recipient AP.

3. The apparatus of claim 1 or 2, wherein the BSRP trigger frame is encoded to poll the recipient AP about traffic requirements of the recipient AP.

4. The apparatus of any one of claims 1 to 3, wherein the information representing the flow comprises an indication of a user priority for the TXOP.

5. The apparatus of any one of claims 1 to 4, wherein the information representing the flow comprises an indication of an access category, AC, for the TXOP

6. The apparatus of claim 4 or claim 5, wherein the information representing the flow is included in a special user information field of the trigger frame or in a common information field of the trigger frame.

7. The apparatus of any one of claims 1 to 6, wherein the processing circuitry is further configured to process a response from the recipient AP, wherein the response comprises queue size information for only one or more traffic identifiers, TIDs, that map to the flow represented by the information in the BSRP trigger frame.

8. A method for an access point, AP, the method comprising:
encoding a buffer status report poll, BSRP, trigger frame for transmission to a recipient AP, wherein the BSRP trigger frame comprises a user information field comprising information representing a flow that the AP requests to schedule during a transmission opportunity, TXOP;
instructing to transmit the BSRP trigger frame to the recipient AP.

9. A computer-readable medium comprising instructions which, if executed by a processor of an access point, AP, cause the processor to perform the method of claim 8.

10. An apparatus for an access point, AP, the apparatus comprising processing circuitry coupled to storage, the processing circuitry configured to:
receive a buffer status report poll, BSRP, trigger frame from a transmitting AP,
decode the BSRP trigger frame, wherein the BSRP trigger frame comprises a user information field comprising information representing a flow that the transmitting AP requests to schedule during a transmission opportunity, TXOP.

11. The apparatus of claim 10, wherein the processing circuitry is further configured to, in response to the BSRP trigger frame, determine whether to transmit a response based on the decoded information.

12. The apparatus of claim 10 claim 11, wherein the processing circuitry is further configured to encode a response comprising queue size information for only one or more traffic identifiers, TIDs, that map to the flow represented by the decoded information.

13. The apparatus of any one of claims 10 to 12, wherein the information comprises an indication of a user priority or an access category, AC, for the TXOP.

14. A method for an access point, AP, the method comprising:
receiving a buffer status report poll, BSRP, trigger frame from a transmitting AP;
decoding the BSRP trigger frame, wherein the BSRP trigger frame comprises a user information field comprising information representing a flow that the transmitting AP requests to schedule during a transmission opportunity, TXOP.

15. A computer-readable medium comprising instructions which, if executed by a processor of an access point, AP, cause the processor to perform the method of claim 14.
